# EUROPEAN PATENT SPECIFICATION

(11) **EP 2 920 451 B1**
(45) Date of publication and mention of the grant of the patent: **13.12.2017**
(21) Application number: 13766176.5
(22) Date of filing: 06.09.2013
(51) Int. Cl.: F02M 35/16, F02M 35/08, F02M 35/022, F02M 35/02

(54) **AIR INTAKE SYSTEM FOR A WORK VEHICLE**
LUFTEINLASSSYSTEM FÜR EIN WERKSFAHRZEUG
SYSTÈME D'ADMISSION D'AIR POUR UN VÉHICULE DE TRAVAIL

(30) Priority: 14.11.2012 US 201261726229 P
(43) Date of publication of application: 23.09.2015
(73) Proprietor: CNH Industrial Italia S.p.A., 10135 Torino (IT)
(72) Inventor: CHLYSTEK, Thomas Michael, Darien, Illinois 60561 (US); CHERNYAVSKY, Leonid, Glenview, Illinois 60025 (US); BUNNELL, Michael Charles, Clarendon Hills, Illinois 60514 (US); GOMEZ, Lorenzo Anthony, Schiller Park, Illinois 60176 (US); MOREY, Daniel Alan, Mundelein, Illinois 60060 (US); KLASSEN, Mark Douglas, Lockport, Illinois 60441 (US)
(74) Representative: CNH Industrial IP Department
(86) International application number: PCT/US2013/058367
(87) International publication number: WO 2014/077938

(56) References cited:
- EP-A1- 1 918 009
- EP-A2- 1 950 407
- DE-A1- 10 128 790

## Description

### FIELD OF THE INVENTION

The present subject matter relates generally to work vehicles and, more particularly, to an air intake system for a work vehicle that includes an electric blower configured to aspirate a pre-cleaner of the air intake system.

### BACKGROUND OF THE INVENTION

Work vehicles typically include internal combustion engines that require clean air for use within the combustion process. Since many work vehicles, such as tractors and other agricultural vehicles, operate in fields and other harvesting environments in which the ambient air contains large amounts of dust, plant material and other particulates, an air intake system having an effective filter assembly is required. For example, conventional filter assemblies for work vehicles typically include a vortex or cyclone pre-cleaner configured to separate large particulates from the intake air and a porous air filter downstream of the pre-cleaner to provide the final stage of filtering prior to delivering the air into the engine.

To prevent the air filter from clogging, the large particulates separated from the intake air by the pre-cleaner must be removed from the filter assembly. Typically, such particulates are removed from the filter assembly via an outlet duct using a vacuum generated by the exhaust flow from the engine. However, the vacuum generated by the exhaust flow is often insufficient to meet the performance requirements of the filter assembly, thereby causing the air filter to plug within a short period of time.

To address these issues, U.S. Pat. Pub. No. 2011/0072769 (Vladaj et al), entitled "Air Intake System," discloses an air intake system including a fan module mounted directly to the filter assembly which is dedicated to delivering a vacuum that sucks particulates from the pre-cleaner. Specifically, the fan module includes a fan and a motor housed within a sleeve, with a rotational axis of the fan and the motor being concentrically aligned with a central axis of the sleeve. During operation, particulates are sucked from the pre-cleaner and flow through the sleeve along a flow path radially aligned with and extending parallel to the rotational axis of the fan and the motor. As such, the particulates may be directed into the motor, itself, which can result in significant damage to the motor. Another example of such a system is shown in DE-10128790A1.

Accordingly, an air intake system including an electric blower that can effectively remove particulates from the pre-cleaner while decreasing risk of damage to the blower's motor would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to an air intake system for a work vehicle. The air intake system may generally include a filter assembly having a pre-cleaner configured to separate particulates from air received within the filter assembly. The pre-cleaner may define a pre-cleaner outlet. The air intake system may also include a conduit extending between an upstream end and a downstream end. The upstream end of the conduit may be in fluid communication with the pre-cleaner outlet. In addition, the air intake system may include a blower having a fan and a housing encasing the fan. The housing may define a blower inlet in fluid communication with the downstream end of the conduit. The fan may be configured to create a vacuum such that the particulates separated from the air are expelled from the pre-cleaner outlet and flow through the conduit and into the housing. The housing may further define a blower outlet through which the particulates are expelled from the housing. The flow of particulates through the blower outlet may be oriented non-parallel to a rotational axis of the fan.

In another aspect, the present subject matter is directed to an air intake system for a work vehicle. The air intake system may generally include a filter assembly having a pre-cleaner configured to separate particulates from air received within the filter assembly. The pre-cleaner may define a pre-cleaner outlet. The air intake system may also include a conduit extending between an upstream end and a downstream end. The upstream end may be in fluid communication with the pre-cleaner outlet. In addition, the air intake system may include a blower having a fan and a housing encasing the fan. The housing may define a blower inlet in fluid communication with the downstream end of the conduit. The fan may be configured to create a vacuum such that the particulates separated from the air are expelled from the outlet port and flow through the conduit and into the housing. The housing may further define a blower outlet through which the particulates are expelled from the housing. The blower may be spaced apart from the filter assembly and may be supported by a separate component of the work vehicle.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a side view of one embodiment of a work vehicle;
FIG. 2 illustrates a simplified, schematic view of one embodiment of an air filter system suitable for use within the work vehicle shown in FIG. 1;
FIG. 3 illustrates a perspective view of one embodiment of a suitable configuration of the air intake system shown in FIG. 2;
FIG. 4 illustrates a widthwise, cross-sectional view of one embodiment of a blower of the air intake system shown in FIG. 3; and
FIG. 5 illustrates a crosswise, cross-sectional view of the blower shown in FIG. 4.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to an air intake system for a work vehicle. Specifically, in several embodiments, the air intake system may include a filter assembly having a pre-cleaner configured to separate particulates from the air flowing into the system and an air filter disposed downstream of the pre-cleaner. In addition, the air intake system may include an electric blower configured to aspirate the pre-cleaner by creating a vacuum that sucks the particulates out of the pre-cleaner. As will be described below, in several embodiments, the blower may be spaced apart from the filter assembly and may be completely supported by a separate component of the work vehicle (e.g., a fuel tank of the work vehicle). In addition, the blower may be configured such that the particulates flowing into the blower are directed away from blower's motor, thereby preventing damage to the motor.

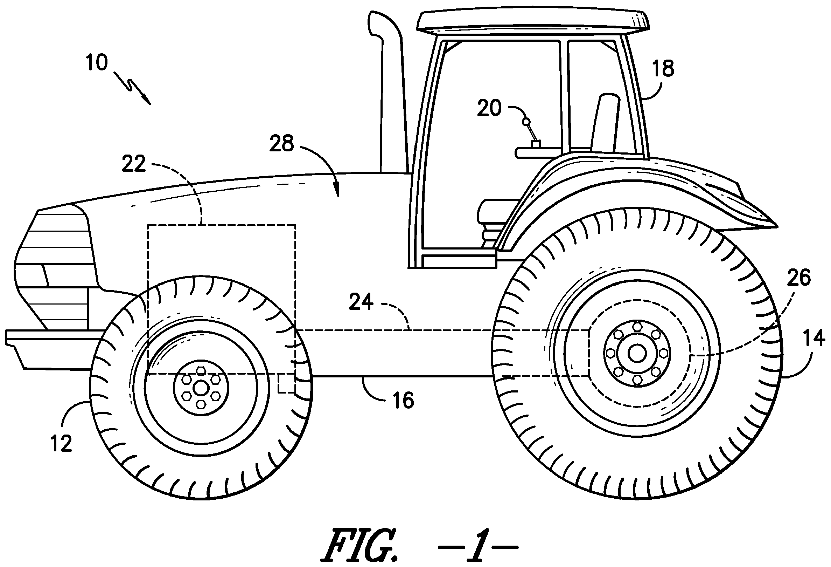

Referring now to the drawings, FIG. 1 illustrates a side view of one embodiment of a work vehicle 10. As shown, the work vehicle 10 is configured as an agricultural tractor. However, in other embodiments, the work vehicle 10 may be configured as any other suitable work vehicle known in the art, such as various other agricultural vehicles, earth-moving vehicles, road vehicles, loaders and/or the like.

As shown in FIG. 1, the work vehicle 10 includes a pair of front wheels 12, a pair or rear wheels 14 and a chassis 16 coupled to and supported by the wheels 12, 14. An operator's cab 18 may be supported by a portion of the chassis 16 and may house various control devices 20 (e.g., levers, pedals, control panels and/or the like) for permitting an operator to control the operation of the work vehicle 10. Additionally, the work vehicle 10 may include an engine 22 and a transmission 24 mounted on the chassis 16. The transmission 24 may be operably coupled to the engine 22 and may provide variably adjusted gear ratios for transferring engine power to the wheels 14 via a differential 26. The engine 22, transmission 24, and differential 26 may collectively define a drive train 28 of the work vehicle 10.

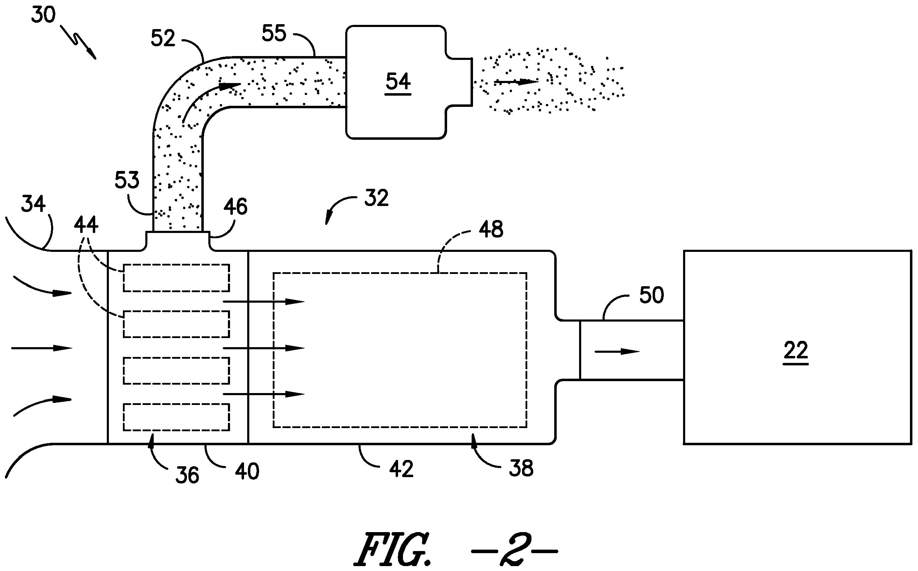

Referring now to FIG. 2, a schematic view of one embodiment of an air intake system 30 suitable for use with the work vehicle 10 shown in FIG. 1 is illustrated in accordance with aspects of the present subject matter. As shown in FIG. 2, the air intake system 30 may generally include a filter assembly 32 configured to receive dirty air from an intake duct 34 and clean/filter such air for subsequent delivery to the engine 22. In general, the filter assembly 32 may include a pre-cleaner 36 and an air filter 38 disposed downstream of the pre-cleaner 36. In addition, the filter assembly 32 may include a pre-cleaner housing 40 configured to encase the pre-cleaner 36 and a filter housing 42 configured to encase the air filter 38. It should be appreciated that the pre-cleaner housing 40 and the filter housing may 42 be formed integrally with one another (e.g., by forming both housings 40, 42 as a single continuous housing) or the pre-cleaner housing 40 and the filter housing 42 may comprise separate components configured to be separately coupled to one another

As is generally understood, the pre-cleaner 36 may be configured to remove portions of the dust, dirt, debris, plant matter and other particulates contained within the air flowing into the filter assembly 32 via the intake duct 34. Specifically, in several embodiments, the pre-cleaner 36 may include a plurality of tubes (e.g., turbo tubes), dirt separators, and/or any other suitable pre-cleaner elements 44 configured to separate particulates from the air via centripetal force. For example, the pre-cleaner elements 44 may be configured to impart a vortex or spinning motion to the flow of air entering the filter assembly 32. As a result, large particulates contained within the air may be forced radially outwardly along the inner wall of the pre-cleaner housing 40 by the centripetal force of the vortex/spinning motion. These large particulates may then be expelled from the filter assembly 32 via an outlet port 46 defined in the pre-cleaner housing 40 (hereinafter referred to as the "pre-cleaner outlet 46").

Additionally, the air filter 38 may generally be configured to receive the cleaned air flowing from the pre-cleaner 36 and filter such air to provide a final stage of filtering prior to delivery of the air to the engine 22. Thus, as shown in FIG. 2, the air filter 38 may generally include one or more filter elements 48 configured to catch or trap the remaining particulates contained within the cleaned air. For instance, in several embodiments, the filter element(s) 48 may be made from a fibrous, porous or mesh material that allows air to pass therethrough while catching/trapping any particulates. The cleaned/filtered air may then be directed through a suitable conduit 50 to the engine 22, where the air may be mixed with fuel and combusted.

Referring still to FIG. 2, the disclosed air intake system 30 may also include a conduit 52 having an upstream end 53 in fluid communication with the pre-cleaner outlet 46 and a downstream end 55 in fluid communication with an electric blower 54 configured to aspirate the pre-cleaner 36. Specifically, as will be described in greater detail below, the blower 54 may be configured to generate a vacuum that sucks the particulate flowing along the inner wall of the pre-cleaner housing 40 out the pre-cleaner outlet 46 and through the conduit 52. The particulate may then be expelled from the blower 54 back into the environment.

It should be appreciated that the conduit 52 may generally be any suitable elongated member configured for the flow of air and/or fluid therethrough. For example, the conduit 52 may comprise a tube, hose, pipe, duct and/or any other conduit-like member defining a passageway for the flow of air/fluid.

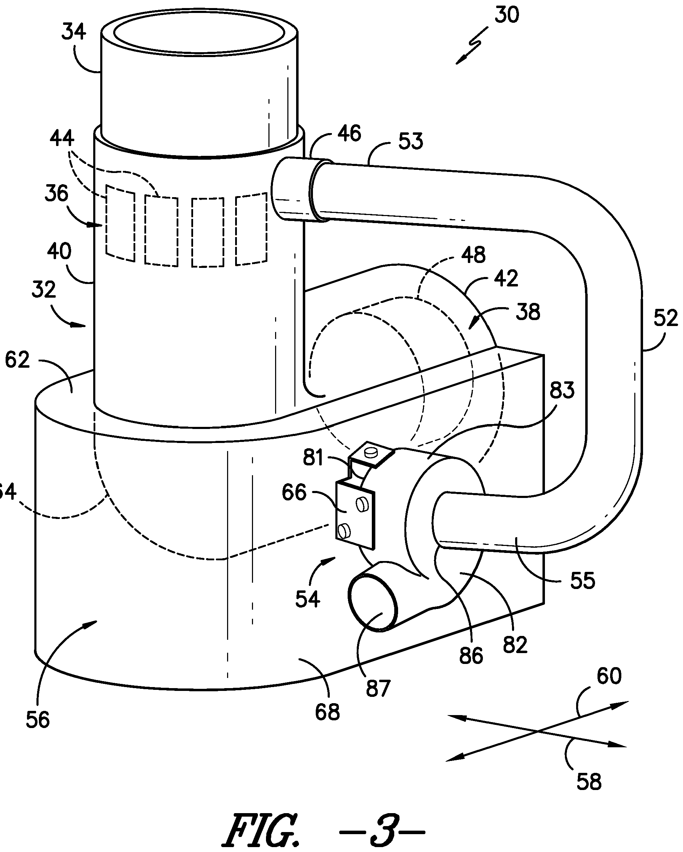

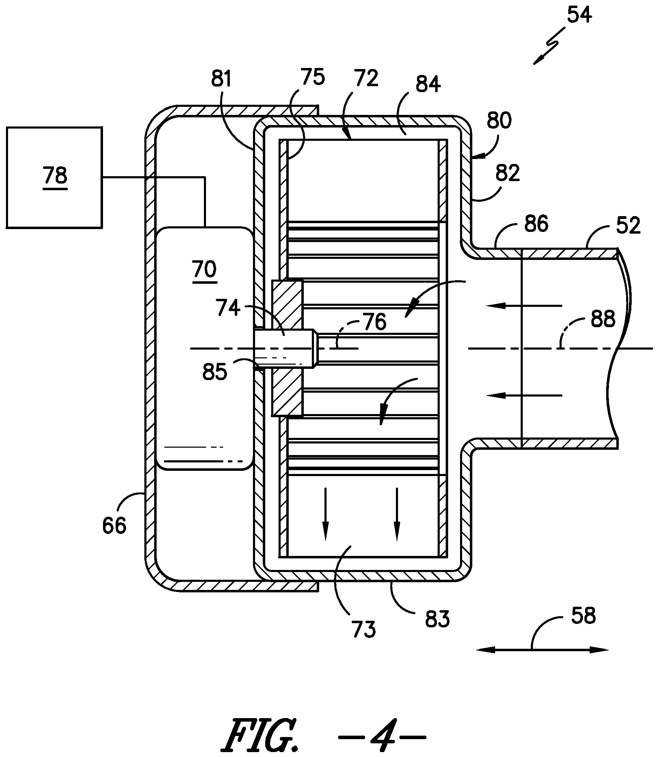

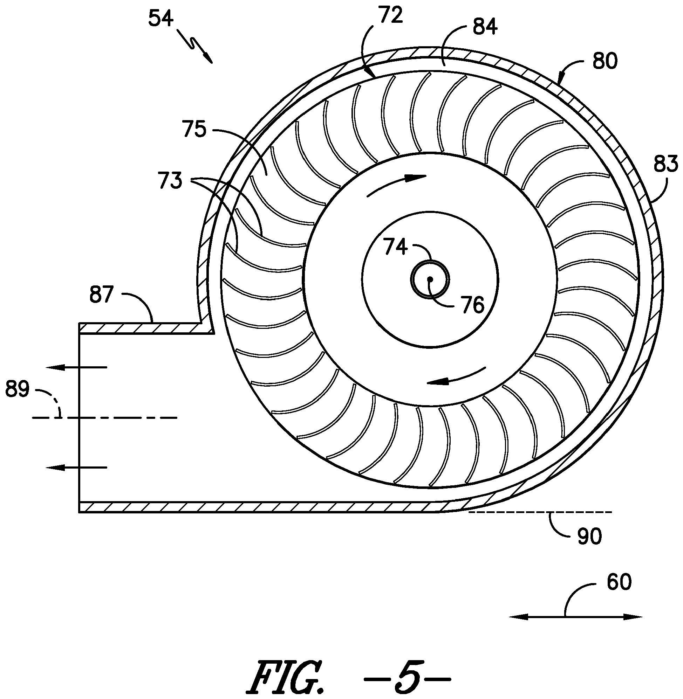

Referring now to FIGS. 3-5, a specific embodiment of the air intake system 30 described above is illustrated in accordance with aspects of the present subject matter. Specifically, FIG. 3 illustrates a perspective view of various components of the air intake system 30 mounted to or otherwise supported by a fuel tank 56 of the work vehicle 10. FIG. 4 illustrates a cross-sectional view of the blower 54 shown in FIG. 3, particularly illustrating a cross-sectional view in a widthwise direction of the blower 54 (indicated by the arrow 58 in FIG. 3). Additionally, FIG. 5 illustrates another cross-sectional view of the blower shown in FIG. 3, particularly illustrating a cross-sectional view in a crosswise direction of the blower 54 (indicated by the arrow 60 in FIG. 3).

As shown in FIG. 3, in several embodiments, the pre-cleaner housing 40 and the filter housing 42 may be oriented generally perpendicularly to one another such that the filter assembly 32 generally defines an "L" shape. As such, the air flowing into the intake duct 34 may be directed generally vertically downward through the pre-cleaner 36 and then generally horizontally through the air filter 38. However, in other embodiments, the pre-cleaner housing 40 and the filter housing 42 may have any other suitable orientation relative to one another. For example, in another embodiment, the pre-cleaner housing 40 and the filter housing 42 may be aligned along a common axis such that air flowing through the filter assembly 32 is directed continuously along such axis (e.g., similar to the schematic view of the filter assembly 32 shown in FIG. 2).

Additionally, as particularly shown in FIG. 3, in several embodiments, the filter assembly 32 may be coupled to or otherwise supported by a fuel tank 56 of the work vehicle 10. For example, the fuel tank 56 may be molded or otherwise formed so as to define a recessed feature configured to receive a portion of the filter assembly 32. Specifically, as shown in the illustrated embodiment, a top 62 of the fuel tank 56 may define a semi-circular recessed feature 64 such that a portion of the cylindrical filter housing 42 and/or pre-cleaner housing 40 may be received within the recessed feature 64. However, in another embodiment, the filter assembly 32 may simply be coupled to the fuel tank 56 without being received within any type of recessed feature 64. Moreover, in alternative embodiments, the filter assembly 32 may be disposed at any other suitable location on and/or within the work vehicle 10 and, thus, may be coupled to and/or supported by any other suitable component of the work vehicle 10.

Similarly, the blower 54 of the air intake system 30 may also be coupled to or otherwise supported by the fuel tank 56. For example, as shown in FIG. 3, one or more suitable mounting brackets 66 may be coupled between a side 68 of the fuel tank 56 and the blower 54 to allow the blower 54 to be secured to and supported by the fuel tank 56. However, in alternative embodiments, the blower 54 may be disposed at any other suitable location on and/or within the work vehicle 10 and, thus, may be coupled to and/or supported by any other suitable component of the work vehicle 10.

By configuring the blower 54 to be spaced apart from the filter assembly 32, it should be appreciated that numerous advantages may be provided to the disclosed air intake system 30. For example, when the blower 54 is directly mounted to or otherwise directly supported by the filter assembly 32, the blower may often be subject to vibrations or oscillations transferred from the filter assembly 32 during operation of the work vehicle 10. However, by rigidly mounting the blower 54 to a separate component of the work vehicle 10 (e.g., the fuel tank 56), a degree of vibration dampening may be achieved. In addition, since the conduit 52 may be designed to have any suitable length and/or shape that permits the blower 54 to be in fluid communication with the pre-cleaner 44, the blower 54 may be positioned at a more desirable location than directly adjacent to the filter assembly 32. For example, as shown in FIG. 3, the blower 54 may be disposed at a lower position on the work vehicle 10, thereby reducing the amount of shock transmitted to the blower 54 and allowing the particulate expelled from the blower 54 to be directed away from the work vehicle 10 and onto the ground. Similarly, by spacing the blower 54 apart from the filter assembly 32, the blower 54 may be disposed at a location that is hidden from view, such as at a location underneath a set of steps (not shown) extending adjacent to the fuel tank 56.

Referring particularly now to FIGS. 4 and 5, the disclosed blower 54 may generally include an electric motor 70 configured to rotationally drive a fan 72 such that a negative pressure or vacuum is generated within the blower 54 and the conduit 52 that is capable of aspirating the pre-cleaner 36. For example, as shown in FIG. 4, the fan 72 may be mounted to an output shaft 74 of the motor 70 such that rotation of the output shaft 74 rotationally drives the fan 72 about a rotational axis 76 of the motor 70. It should be appreciated that the motor 70 may be configured to rotate the fan 72 at a constant speed or a variable speed. For example, in one embodiment, the rotational speed of the motor 70 may be electronically controlled via a controller 78 of the work vehicle 10 (e.g., a computer and/or other suitable processing device). In such an embodiment, the rotational speed of the motor/fan 70,72 and, thus, the suction of the vacuum generated within the blower 54, may be controlled independent of the engine speed, exhaust flow and/or any other operating parameters of the work vehicle 10.

It should also be appreciated that the fan 72 may generally have any suitable configuration that permits it to function as described herein. For example, as shown in FIGS. 4 and 5, in one embodiment, the fan may be configured as a blower or centrifugal fan (also referred to as a squirrel cage fan) and may include a plurality of blades 73 (e.g., straight radial blades, forward-curved blades or backwards-curved blades) mounted to a suitable base or hub 75.

Additionally, the blower 54 may also include a housing 80 configured to encase and/or support the motor 70 and the fan 72. For example, as shown in the illustrated embodiment, the housing 80 may be generally cylindrically shaped and may include a first endwall 81, a second endwall 82 and a circumferential sidewall 83 extending between the first and second endwalls 81, 82. The endwalls 81, 82 and the sidewall 83 may generally define an enclosed, cylindrical volume 84 (hereinafter referred to as the "fan compartment 84") within which the fan 72 may be rotationally disposed. In such an embodiment, the motor 70 may be coupled to the housing 80 (e.g., using suitable mechanical fasteners, such as bolts, screws, brackets and/or the like) in a manner that permits the motor 70 to rotationally drive the fan 72 within the fan compartment 84. For instance as shown in FIG. 4, an opening 85 may be defined in the first endwall 81 such that, when the motor 70 is coupled to the housing 80, the output shaft 74 may extend through the opening 85 in order to rotationally drive the fan 72.

Moreover, the blower 54 may include a blower inlet 86 and a blower outlet 87 defined by the housing 80. In general, the blower inlet 86 may be configured to be in fluid communication with the conduit 52 such that particulate flowing through the conduit 52 may be directed into the fan compartment 84 via the blower inlet 86. For example, as shown in FIG. 4, the housing 80 may be configured such that the blower inlet 86 is defined by the second endwall 82 of the housing 80. In such an embodiment, blower inlet 86 may, for example, be positioned along the second endwall 82 such that an inlet centerline 88 of the blower inlet 86 is generally aligned with and/or extends parallel to the rotational axis 76 of the motor/fan 70, 72. As such, the flow of particulate through the blower inlet 86 and into the fan compartment 84 may be directed along a flow path that is generally parallel to the rotational axis 76. However, in other embodiments, the blower inlet 86 may be defined at any other suitable location on the housing 80 and the inlet centerline 88 may have any other suitable orientation relative to the rotational axis 76.

Similarly, the blower outlet 87 may generally correspond to an opening defined by the housing through which the particulate flowing into the fan compartment 84 is expelled from the blower 54. In several embodiments, the housing 80 may be configured such that the blower outlet 54 forms an outward extension of the cylindrical sidewall 83. For example, as shown in the illustrated embodiment, the blower outlet 87 may be configured to extend outwardly from the sidewall 83 such that an outlet centerline 89 of the blower outlet 87 extends generally perpendicular to the rotational axis 76 of the motor/fan 70,72 (and, optionally, the inlet centerline 88) and generally parallel to a tangent line 90 defined by the outer surface of the sidewall 83. Additionally, as shown in FIG. 5, the outlet centerline 89 may also be radially offset from the rotational axis 76 (and, optionally, the inlet centerline 86). As such, the flow of particulates entering the blower 54 along the inlet centerline 86 may be redirected within the fan compartment 84 prior to being expelled through the blower outlet 87.

It should be appreciated that, by mounting the motor 70 to the outside the housing 80 and by positioning the blower outlet 87 as described herein, the component life of the motor 70 may enhanced significantly. Specifically, as shown in FIG. 2, the first endwall 81 of the housing 80 may generally serve to protect the motor from the particulates flowing into the fan compartment 84. Moreover, due to the relative positioning of the blower inlet 86 and outlet 88, the particulates entering the fan compartment 84 may be redirected away from the rotational axis 76 of the motor/fan 70, 72 towards the blower outlet 86. As such, any damage that may have otherwise occurred due to dirt, dust and/or other particulates flowing between the output shaft 74 and the first endwall 81 and into the motor 70 may be avoided.

It should also be appreciated that, in alternative embodiments, the blower outlet 87 may be configured to have any other suitable orientation in which the outlet centerline 89 extends non-parallel to and/or is radially offset from the rotational axis 76 of the motor/fan 70, 71. For example, in one embodiment, the blower outlet 87 may be configured to extend from the sidewall 83 such that the outlet centerline 89 is oriented relative to the rotational axis 76 at an angle that is less than 90 degrees or greater than 90 degrees. In another embodiment, the blower outlet 87 may be configured to extend from the first or second endwall 81, 82 such that the outlet centerline 89 is parallel to, but radially offset from, the rotational axis 76.

Additionally, in several embodiments, the blower outlet 87 may be configured to be positioned along a bottom portion of the housing 80. For example, as shown in FIGS. 3 and 5, the blower outlet 87 may extend from a bottom half of the sidewall 83 (e.g. by extending parallel to the tangent line 90 defined at the very bottom of the housing 80). As such, in addition to the particulates being carried downward by the air flowing between the blower inlet 86 and the blower outlet 87, gravity may pull the particulates downward within the fan compartment 84, thereby assisting in directing the particulates towards the blower outlet 87.

## Claims

1. An air intake system (30) for a work vehicle (10), the air intake system (30) comprising:
- a filter assembly (32) including a pre-cleaner (36) configured to separate particulate from air received by the filter assembly (32), the pre-cleaner (36) defining a pre-cleaner outlet (46);
- a conduit (52) extending between an upstream end and a downstream end, the upstream end being in fluid communication with the pre-cleaner outlet (46); and
- a blower (54) including a fan (72) and a housing (80) encasing the fan (72), the housing (80) defining a blower inlet (86) in fluid communication with the downstream end of the conduit (52), the fan (72) being configured to create a vacuum such that the particulate separated from the air within the pre-cleaner (36) is expelled from the pre-cleaner outlet (46) and flows through the conduit (52) and into the housing (80), the housing (80) further defining a blower outlet (87) through which the particulate is expelled from the housing (80),
wherein the flow of particulate through the blower outlet (87) is oriented non-parallel to a rotational axis of the fan (76); and **characterised in that**, the housing (80) includes a first endwall (81), a second endwall (82) disposed opposite the first endwall (81) and a sidewall (83) extending between the first and second endwalls (81, 82), the blower (54) further including a motor (70) configured to rotationally drive the fan (72), the motor (70) being mounted to one of the first endwall (81) or the second endwall (82), the blower inlet (86) being defined through the other of the first endwall (81) or the second endwall (82).

2. The air intake system (30) of claim 1 wherein the blower outlet (87) is defined through the sidewall (83).

3. The air intake system (30) of claim 2 wherein the blower outlet (87) defines an outlet centreline (89), the outlet centerline (89) extending parallel to a tangent line (90) defined the sidewall (83).

4. The air intake system (30) of claim 2, wherein the blower outlet (87) extends from a bottom portion of the sidewall (83).

5. The air intake system (30) of claim 1, wherein the blower outlet (87) defines an outlet centerline (89) and the blower inlet (86) defines an inlet centreline (88), the outlet centerline (89) extending perpendicular to the inlet centreline (88).

6. The air intake system (30) of claim 1, wherein the blower outlet (87) defines an outlet centreline (89), the outlet centerline (89) extending perpendicular to the rotational axis of the fan (76).

7. The air intake system (30) of claim 1, wherein the blower (54) is spaced apart from the filter assembly (32) and is supported by a separate component of the work vehicle (10).

8. The air intake system (30) of claim 7, wherein the blower (54) is coupled to a fuel tank (56) of the work vehicle (10).

9. The air intake system (30) of claim 8, wherein the fuel tank (56) includes a top defining a recessed feature (64), at least a portion of the filter assembly (32) being received within the recessed feature (64).

## Patentansprüche

1. Lufteinlasssystem (30) für ein Arbeitsfahrzeug (10), wobei das Lufteinlasssystem (30) aufweist:
- eine Filteranordnung (32) mit einer Vorreinigungseinrichtung (36), die dazu eingerichtet ist, Partikel von Luft zu trennen, die durch die Filteranordnung (32) aufgenommen werden, wobei die Vorreinigungseinrichtung (36) einen Vorreinigungsauslass (46) definiert;
- ein Rohr (52), das sich zwischen einem stromauf gelegenen Ende und einem stromab gelegenen Ende erstreckt, wobei das stromauf gelegene Ende in Fluidkommunikation mit dem Vorreinigungsauslass (46) ist; und
- eine Gebläseeinrichtung (54) mit einem Lüfterrad (72) und einem Gehäuse (80), das den Lüfter (72) einschließt, wobei das Gehäuse (80) einen Gebläseeinlass (86) in Fluidkommunikation mit dem stromab gelegenen Ende des Rohres (52) definiert, wobei das Lüfterrad (72) dazu eingerichtet ist, um ein Vakuum zu erzeugen, so dass die von der Luft innerhalb der Vorreinigungseinrichtung (36) abgetrennten Partikel aus dem Vorreinigungsauslass (46) ausgestoßen werden und durch das Rohr (52) und in das Gehäuse (80) fließen, wobei das Gehäuse (80) des Weiteren einen Gebläseauslass (87) definiert, durch den die Partikel von dem Gehäuse (80) ausgestoßen werden,
wobei der Partikelfluss durch den Gebläseauslass (87) nicht parallel zu einer Rotationsachse des Lüfters (76) ausgerichtet ist; und
**dadurch gekennzeichnet, dass**
das Gehäuse (80) eine erste Endwand (81), eine zweite Endwand (82), die gegenüber der ersten Endwand (81) angeordnet ist, und eine Seitenwand (83) umfasst, die sich zwischen den ersten und zweiten Endwänden (81, 82) erstreckt, wobei die Gebläseeinrichtung (54) des Weiteren einen Motor (70) aufweist, der dazu eingerichtet ist, das Lüfterrad (72) in Rotation zu versetzen, wobei der Motor (70) an einer der ersten Endwand (81) oder der zweiten Endwand (82) angebracht ist, wobei der Gebläseeinlass (86) durch die andere der ersten Endwand (81) oder zweiten Endwand (82) definiert ist.

2. Lufteinlasssystem (30) nach Anspruch 1, wobei der Gebläseauslass (87) durch die Seitenwand (83) definiert ist.

3. Lufteinlasssystem (30) nach Anspruch 2, wobei der Gebläseauslass (87) eine Auslassmittellinie (89) definiert, wobei sich die Auslassmittellinie (89) parallel zu einer Tangente (90) erstreckt, die durch die Seitenwand (83) definiert ist.

4. Lufteinlasssystem (30) nach Anspruch 2, wobei der Gebläseauslass (87) sich von einem unteren Abschnitt der Seitenwand (83) erstreckt.

5. Lufteinlasssystem (30) nach Anspruch 1, wobei der Gebläseauslass (87) eine Auslassmittellinie (89) definiert und der Gebläseeinlass (86) eine Einlassmittellinie (88) definiert, wobei die Auslassmittellinie (89) sich senkrecht zu der Einlassmittellinie (88) erstreckt.

6. Lufteinlasssystem (30) nach Anspruch 1, wobei der Gebläseauslass (87) eine Auslassmittellinie (89) definiert, wobei sich die Auslassmittellinie (89) senkrecht zu der Rotationsachse des Lüfterrads (76) erstreckt.

7. Lufteinlasssystem (30) nach Anspruch 1, wobei die Gebläseeinrichtung (54) von der Filteranordnung (32) beabstandet ist und von einem getrennten Bestandteil des Arbeitsfahrzeugs (10) getragen ist.

8. Lufteinlasssystem (30) nach Anspruch 7, wobei die Gebläseeinrichtung (54) mit einem Kraftstofftank (56) des Arbeitsfahrzeugs (10) gekoppelt ist.

9. Lufteinlasssystem (30) nach Anspruch 8, wobei der Kraftstofftank (56) eine Oberseite umfasst, die ein Vertiefungselement (64) definiert, wobei mindestens ein Abschnitt der Filteranordnung (32) innerhalb des Vertiefungselements (64) aufgenommen ist.

## Revendications

1. Système de prise d'air (30) pour un véhicule à moteur (10), le système de prise d'air (30) comprenant :
- un ensemble de filtres (32) incluant un prénettoyeur (36) configuré pour séparer les particules de l'air reçues par l'ensemble de filtres (32), le prénettoyeur (36) définissant une sortie du prénettoyeur (46) ;
- un conduit (52) s'étendant entre une extrémité amont et une extrémité aval, l'extrémité amont étant en communication fluidique avec la sortie du prénettoyeur (46) ; et
- une turbine (54) incluant a ventilateur (72) et un logement (80) entourant le ventilateur (72), le logement (80) définissant une entrée de turbine (86) en communication fluidique avec l'extrémité aval du conduit (52), le ventilateur (72) étant configuré pour créer un vide tel que les particules séparées de l'air dans le prénettoyeur (36) sont expulsées de la sortie du prénettoyeur (46) et s'écoulent à travers le conduit (52) pour entrer dans le logement (80), le logement (80) définissant en outre une sortie de turbine (87) par laquelle les particules sont expulsées du logement (80),
dans lequel le flux de particules à travers la sortie de la turbine (87) est orienté de manière non parallèle vers un axe de rotation du ventilateur (76) ; et
**caractérisé en ce que** le logement (80) comprend une première paroi finale (81), une seconde paroi finale (82) disposée à l'opposé de la première paroi finale (81) et une paroi latérale (83) s'étendant entre les première et seconde parois finales (81, 82), la turbine (54) incluant également un moteur (70) configuré pour entraîner à rotation le ventilateur (72), le moteur (70) étant monté sur l'une de la première paroi finale (81) ou de la seconde paroi finale (82), l'entrée de la turbine (86) étant définie par l'autre de la première paroi finale (81) ou de la seconde paroi finale (82).

2. Système de prise d'air (30) selon la revendication 1, dans lequel la sortie de la turbine (87) est définie par la paroi latérale (83).

3. Système de prise d'air (30) selon la revendication 2, dans lequel la sortie de la turbine (87) définit un axe de sortie (89), l'axe de sortie (89) s'étendant parallèlement à une tangente (90) définissant la paroi latérale (83).

4. Système de prise d'air (30) selon la revendication 2, dans lequel la sortie de la turbine (87) s'étend depuis une partie inférieure de la paroi latérale (83).

5. Système de prise d'air (30) selon la revendication 1, dans lequel la sortie de la turbine (87) définit un axe de sortie (89) et l'entrée de turbine (86) définit un axe d'entrée (88), l'axe de sortie (89) s'étendant perpendiculairement à l'axe d'entrée (88).

6. Système de prise d'air (30) selon la revendication 1, dans lequel la sortie de la turbine (87) définit un axe de sortie (89), l'axe de sortie (89) s'étendant perpendiculairement à l'axe de rotation du ventilateur (76).

7. Système de prise d'air (30) selon la revendication 1, dans lequel la turbine (54) est séparée de l'ensemble de filtres (32) et est supportée par un composant séparé du véhicule à moteur (10).

8. Système de prise d'air (30) selon la revendication 7, dans lequel la turbine (54) est associée à un réservoir de carburant (56) du véhicule à moteur (10).

9. Système de prise d'air (30) selon la revendication 8, dans lequel le réservoir de carburant (56) comprend un sommet définissant un élément rentré (64), au moins une partie de l'ensemble de filtres (32) étant logée à l'intérieur de l'élément rentré (64).
